# EUROPÄISCHE PATENTSCHRIFT

(11) **EP 2 021 427 B1**
(45) Veröffentlichungstag und Bekanntmachung des Hinweises auf die Patenterteilung: **10.08.2011**
(21) Anmeldenummer: 07725226.0
(22) Anmeldetag: 15.05.2007
(51) Int. Cl.: C09J 7/02, C09J 7/04

(54) **KLEBEBAND SOWIE VERFAHREN ZU DESSEN HERSTELLUNG**
ADHESIVE TAPE AND METHOD FOR MANUFACTURING IT
BANDE ADHÉSIVE ET SON PROCÉDÉ DE FABRICATION

(30) Priorität: 16.05.2006 DE 102006022765
(43) Veröffentlichungstag der Anmeldung: 11.02.2009
(73) Patentinhaber: certoplast Vorwerk & Sohn GmbH, 42285 Wuppertal (DE)
(72) Erfinder: MUNDT, Stefan, 40789 Monheim am Rhein (DE); RAMBUSCH, Peter, 42115 Wuppertal (DE)
(74) Vertreter: Nunnenkamp, Jörg
(86) Internationale Anmeldenummer: PCT/EP2007/004308
(87) Internationale Veröffentlichungsnummer: WO 2007/131770

(56) Entgegenhaltungen:
- WO-A-00/20201
- DE-A1- 4 442 093
- US-A- 2 750 314

## Beschreibung

Die Erfindung betrifft die verwendung eines Klebebandes, mit einem bandförmigen Vliesträger, welcher mehrere zumindest in Bandlängsrichtung durchgängig verlaufende Stabilisierungsfäden als Bestandteile eines Fadengeleges aufweist, die auf seiner Oberfläche und/oder in seinem Innern angeordnet sind, und mit zumindest einer ein- oder beidseitigen Kleberbeschichtung, zur Bündelung von kabeln in Automobilen

Klebebänder mit bandförmigen Vliesträgern und einer Kleberbeschichtung.sind vielfältig bekannt, wozu nur beispielhaft auf die DE 101 21 109 A1 verwiesen sei. Auch die EP 0 942 057 B1 ist an dieser Stelle einschlägig.

Darüber hinaus werden zur Bündelung von Kabeln in Automobilen Klebebänder auf Basis von Nähvliesträgem, beispielsweise eines Maliwattvlieses eingesetzt (vgl. DE 44 42 093 C2). Solche Nähvliesträger zur Darstellung eines Klebebandes sind grundsätzlich dadurch gekennzeichnet, dass sich durch die eingebrachten Nähte auf der Oberfläche Täler und Erhebungen von Naht zu Naht zwangsläufig einstellen. Hierfür sorgen die in die Fasern des Vliesstoffes eingebrachten und meistens parallel zueinander verlaufenden Nähte.

Aufgrund dieser unregelmäßigen Oberfläche wird für die Kleberbeschichtung des fraglichen Nähvliesträgers relativ viel Klebstoff benötigt, um ein gleichmäßiges Erscheinungsbild und als Folge hiervon definierbare Klebkräfte zur Verfügung zu stellen. Tatsächlich müssen erst die Täler an der Oberfläche des Vliesträgers mit Klebstoff gefüllt werden, bevor eine effektiv wirksame Klebstoffbeschichtung möglich ist, was natürlich hohe Kosten nach sich zieht. Ein gleichmäßiger Klebstoffauftrag und eine definierte Klebkraft sind erforderlich, weil die beschriebenen Klebebänder meistens zur Bündelung von Kabeln in Automobilen eingesetzt werden und folglich dauerhafte und zuverlässige Klebkräfte unbedingt gewährleistet sein müssen.

Obwohl der beschriebene Nähvliesträger auf Maliwattbasis aufwendig und demzufolge kostenintensiv hergestellt werden muss, findet er doch eine gewisse Verbreitung auf dem beschriebenen Einsatzgebiet. Das lässt sich auf seine geringe Dehnung bei Zugbeanspruchung zurückführen, welche hauptsächlich durch die Art und Dichte der Nähfäden vorgegeben wird. Im Gegensatz dazu zeigen Klebebänder mit einem Vliesträger ohne eingebrachte Nähte beim Bündeln eines Kabelsatzes unter hohen Zugkräften oft eine starke Verjüngung des zugehörigen Klebebandes aufgrund zu hoher Dehnungswerte. Dafür lassen sich Klebebänder auf Basis von beispielsweise Spinnvliesträgem nach der EP 0 942 057 B1 besonders kostengünstig herstellen und sind damit ihrerseits für den hauptsächlichen Einsatzzweck zur Bündelung von Kabeln in Automobilen unter Berücksichtigung des dortigen Preisdruckes besonders prädestiniert. Hier setzt die Erfindung ein.

Im Rahmen der gattungsbildenden Lehre nach der WO 00/20201 wird ein handeinreißbares Klebeband für medizinische Anwendungen beschrieben. Dieses verfügt über ein Gazegelege zwischen zwei bandförmigen Vliesträgem. Zusätzliche Leitstrukturen in Querrichtung des Geleges sollen die Handeinreißbarkeit gewährleisten.

Im Rahmen der DE 201 21 262 U1 geht es um ein Trägermaterial auf Vliesbasis insbesondere für ein Klebeband. Zu diesem Zweck ist auf der Oberfläche eines bandförmigen Trägers auf Vliesbasis ein- oder beidseitig zumindest ein Streifen auf Polymerbasis aufgebracht. Dazu ist ein spezieller und zusätzlicher Druckvorgang erforderlich. Tatsächlich werden regelmäßig auf der einen Seite des bandförmigen Trägers die fraglichen Streifen auf Polymerbasis aufgebracht, während die gegenüberliegende Seite eine vollflächig aufgetragene selbstklebende Klebemasse aufweist.

Die US 2 750 314 beschäftigt sich mit einem Klebeband für besonders starke und schwere Kabel zum Einsatz in der Elektroindustrie. Dazu ist ein Vliesträger realisiert, auf den Stabilisierungsfäden aufgebracht sind. Die Stabilisierungsfäden werden offenbar einzeln aufgelegt und sind schon nicht Bestandteile eines Fadengeleges. Von besonderer Bedeutung ist der weitere Umstand, dass die Stabilisierungsfäden in eine Kleberbeschichtung eingebettet sind. Dadurch verfügt das bekannte Klebeband über eine relativ starre Auslegung und ist wenig flexibel.

Der Erfindung liegt das technische Problem zugrunde, ein Klebeband der eingangs beschriebenen Ausgestaltung so weiterzuentwickeln, dass die zuvor beschriebenen widerstreitenden Erfordernisse einer kostengünstigen Herstellung und zugleich geringen Dehnung bei Zugbeanspruchung kombiniert werden.

Zur Lösung dieser technischen Problemstellung ist Gegenstand der Erfindung die Verwendung eines Klebebandes nach Anspruch 1.

Stabilisierungsfaden meint im Rahmen der Erfindung nicht nur ein textiles, linienförmiges Gebilde aus verdrillten oder versponnenen Natur- oder Kunstfasern. Sondern hierunter fallen auch Endlosfasern bzw. Filamente ebenso wie Spinnfasern. Schließlich lassen sich unter den Begriff Stabilisierungsfaden auch Fasern endlicher Länge, sogenannte Stapelfasern, subsumieren, die insgesamt im Vergleich zum Vliesträger über einen durchgängigen Verlauf verfügen und hierzu beispielsweise miteinander verbunden sind oder gekoppelt sein mögen.

Die Stabilisierungsfäden sind Bestandteile eines Fadengeleges. Bei einem solchen Fadengelege handelt es sich um eine räumlich definierte und bestimmte Anordnung der Stabilisierungsfäden im Innem und/oder an der Oberfläche des Vliesträgers. Das betreffende Fadengelege ist dadurch gekennzeichnet, dass wenigstens zwei der Stabilisierungsfäden durchgängig in Bandlängsrichtung verlaufen und hierzu noch zusätzliche Stabilisierungsfäden hinzutreten mögen. Diese zusätzlichen Stabilisierungsfäden verlaufen entweder ebenfalls in Bandlängsrichtung und/oder quer hierzu, beispielsweise schlaufenförmig. Dabei sind die Stabilisierungsfäden größtenteils im Innem des Vliesträgers angeordnet, können aber auch teilweise im Innern und teilweise auf der Oberfläche verlaufen.

In jedem Fall wird durch die eingebrachten Stabilisierungsfäden erreicht, dass das erfindungsgemäße Klebeband mit einer geringen Dehnung ausgerüstet ist, beispielsweise das Klebeband im Ganzen eine Reißdehnung aufweist, die weniger als 50 % beträgt und vorzugsweise im Bereich von 30 % bis 40 % angesiedelt ist. Dabei kann das Dehnungsverhalten besonders flexibel eingestellt werden, indem nicht nur die Dichte und Ausprägung der in den Vliesträger eingebrachten Stabilisierungsfäden variiert wird, sondern zugleich die Materialauswahl für die Stabilisierungsfäden einen wesentlichen Einfluss ausübt. Tatsächlich können für die Realisierung der Stabilisierungsfäden übliche Kunststofffäden zum Einsatz kommen, beispielsweise solche aus Polyester oder Polyamid. Daneben sind auch Viskosefäden, Glasfaserfäden etc. denkbar und werden von der Erfindung umfasst, außerdem andere Stabilisierungsfäden aus Nichtkunststoffmaterialien, beispielsweise solche aus Steinwolle, Baumwolle oder sogar Holzwolle.

So oder so kann das Dehnungsverhalten und folglich die bereits angesprochene Reißdehnung in weiten Grenzen variiert werden, was der Stand der Technik, insbesondere bei den Nähvliesträgem, nicht einmal ansatzweise erreicht. Denn dort ist die Art und Dichte der Nähfäden maschinenbedingt in engen Grenzen vorgegeben, da sich unter anderem der Abstand der Nähnadeln nicht verändem lässt. Demgegenüber kann das erfindungsgemäße Klebeband durch die Auswahl der Anzahl und des Materials für die Stabilisierungsfäden flexibel hinsichtlich des gewünschten Dehnungsverhaltens eingestellt werden.

In diesem Zusammenhang hat es sich als vorteilhaft erwiesen, wenn dass Fadengelege als Fadengewirke oder Fadengewebe ausgebildet ist, was selbstverständlich keine zwingende Voraussetzung darstellt. Tatsächlich stellt beispielsweise ein Fadengewirke aus den Stabilisierungsfäden ein übliches textiles Flächengebilde dar, welches durch Vermaschung eines Stabilisierungsfadens oder eines Stabilisierungsfadensystems entsteht. Beispielsweise mag der in Schussrichtung verlaufende Stabilisierungsfaden in einen Bogen gelegt sein und durch eine vorhergehende Masche hindurchgezogen werden. Im Gegensatz dazu zeichnet sich ein Fadengewebe aus den Stabilisierungsfäden dadurch aus, dass sich rechtwinklig kreuzende längs- und querlaufende Stabilisierungsfäden (Kettfäden und Schussfäden) vorliegen.

Dabei versteht es sich in sämtlichen Fällen, dass die einzelnen Stabilisierungsfäden nicht notwendigerweise aus ein- und demselben Material hergestellt sind bzw. werden müssen. Denn die Erfindung umfasst beispielsweise auch Varianten dergestalt, dass das Fadengewebe aus den Stabilisierungsfäden mit unterschiedlich gestalteten Klett- und Schussfäden ausgerüstet ist.

Es hat sich als vorteilhaft erwiesen, wenn der Vliesträger aus wenigstens zwei Vlieslagen bzw. Faserlagen aufgebaut wird. Denn dadurch lassen sich die Stabilisierungsfäden besonders einfach und vollständig ins Innere des Vliesträgers einbauen, nämlich dergestalt, dass die Stabilisierungsfäden in einem Arbeitsgang in Bandlängsrichtung zwischen die beiden Vlieslagen einlaufen. Dabei können die beiden Vlieslagen aus gleichen Vliesmaterialien respektive Vliestypen aufgebaut werden. Es ist selbstverständlich auch denkbar, beispielsweise eine Vlieslage aus einem Stapelvlies und eine andere Vlieslage aus einem Spinnvlies herzustellen. Auch die Kombination Spinnvlies/Nähvlies für die beiden Vlieslagen ist denkbar, ebenso die Verbindung einer Vlieslage mit einer Filzlage.

Der Vliesträger als solcher mag aus Polyester-, Viskose-, Polypropylen-, Polyethylen- und/oder Bikomponentenfasern (kurzen Fasern im Sinne eines Stapelvlieses oder Endlosfäden als Spinnvlies) aufgebaut sein. Außerdem kann der Vliesträger eine Vorverfestigung erfahren, die beispielsweise durch eine Vemadelung mit Wasser- und oder Luftstrahlen oder durch eine Kalandrierung mit geringem Liniendruck erreicht wird. Die Endverfestigung des Vliesträgers erfolgt dann durch die eingebrachten und in Bandlängsrichtung verlaufenden Stabilisierungsfäden. Dabei mögen diese Stabilisierungsfäden ein Flächengewicht von 10 bis 150 g/m² aufweisen, vorzugsweise ein solches im Bereich von 10 bis 40 g/m².

Als Folge hiervon stellt sich ein Flächengewicht des Vliesträgers inklusive der eingebrachten Stabilisierungsfäden ein, welches im Bereich zwischen 40 bis 300 g/m² angesiedelt ist und vorzugsweise 40 bis 100 g/m² beträgt.

Die Dicke des Vliesträgers inklusive der Stabilisierungsfäden liegt im Bereich zwischen 0,2 bis 2,0 mm und vorzugsweise zwischen 0,2 und 1,0 mm. Die Reißkraft des insgesamt hergestellten Klebebandes ist auf Werte von unterhalb 80 N/cm begrenzt, wobei die Reißdehnung weniger als 50 % beträgt wie bereits ausgeführt wurde.

Als Kleber können übliche Schmelzhaftklebstoffe auf Synthese- und/oder Naturkautschukbasis, Acrylatbasis oder dergleichen eingesetzt werden. Der Kleber mag unvernetzt oder vernetzt auf dem Endprodukt vorliegen. Das gilt auch für mögliche Dispersionshaftstoffe. Ebenso können Lösemittelhaftklebstoffe auf Synthese- und Naturkautschukbasis oder auf Acrylatbasis Verwendung finden. In der Regel lässt sich der Kleber unmittelbar auf eine Seite des Vliesträgers aufbringen, beispielsweise auf diejenige Seite, welche eine Vlieslage aus Stapelfasern aufweist. Selbstverständlich wird von der Erfindung in diesem Zusammenhang auch eine optionale ein- oder beidseitige Beschichtung mit einer Appretur und/oder Lackschicht umfasst. Auch der Zusatz von Flammschutzmitteln, z.B. Ammoniumpolyphosphat, ist denkbar.

Die Kleberbeschichtung liegt in einem Flächengewicht zwischen 30 bis 200 g/m² vor und beträgt insbesondere 50 bis 130 g/m². Zur Aufbringung greift die Erfindung auf eine Direktbeschichtung durch beispielsweise Aufrakeln zurück. Darüber hinaus ist es denkbar, eine so genannte Transferbeschichtung vorzunehmen bzw. andere kontaktlose Beschichtungsverfahren einzusetzen.

### 1. Ausführungsbeispiel

Es wird eine Vlieslage aus Polyesterstapelfasern, also Polyesterfasern endlicher Länge, erzeugt, die ein Flächengewicht von ca. 30 g/m² aufweist. Dabei sind die einzelnen Polyesterfasern vorwiegend quer zur Maschinenrichtung und folglich quer zur Längsrichtung des bandförmigen Vliesträgers ausgerichtet. Auf diese Weise wird beim hergestellten Klebeband erreicht, dass sich dieses besonders einfach in Querrichtung im Vergleich zur Bandlängsrichtung einreißen lässt, und zwar per Hand.

Die fragliche erste Vlieslage wird anschließend mit den Stabilisierungsfäden in Gestalt eines Fadengeleges auf seiner Oberfläche ausgerüstet. Dabei sind die Stabilisierungsfäden als dünne Polyesterfäden ausgelegt und werden auf die erste Vlieslage aufgebracht. Anschließend wird eine zweite, gleich aufgebaute, Vlieslage auf das Aggregat aus erster Vlieslage und Stabilisierungsfäden aufgelegt und beide Vlieslagen werden danach verfestigt, und zwar durch Vernadeln mit Hilfe von Wasserstrahlen und/oder Luftstrahlen.

Diese Vernadelung führt dazu, dass nicht nur die beiden Vlieslagen untereinander miteinander verwirbelt werden, sondern zugleich das dazwischen befindliche Fadengelege aus den Stabilisierungsfäden eine Verbindung mit den beiden Vlieslagen eingeht. - Selbstverständlich könnte der Vliesträger auch nur aus einer Vlieslage aufgebaut sein, auf welche die Stabilisierungsfäden aufgebracht werden und durch einen anschließenden Vemadelungsvorgang zumindest teilweise in sein Inneres gelangen.

Abschließend wird auf den solchermaßen hergestellten Vliesträger eine Kleberbeschichtung aufgebracht, beispielsweise ein Schmelzhaftklebstoff.

### 2. Ausführungsbeispiel

Es werden zwei Vlieslagen mit einem jeweiligen Flächengewicht von ca. 30 g/m² aus Endlosfäden als jeweilige Spinnvliese erzeugt. Dabei kommen beispielsweise Polyesterfilamente zum Einsatz. Das jeweilige Spinnvlies wird anschließend mit geringem Kalander-Liniendruck im Bereich von ca. 10 bis 20 N/mm² vorverfestigt, um seine weitere Handhabung zu erleichtern.

Darauf folgend werden die beiden Vlieslagen zusammengeführt, indem zwischen die beiden Vlieslagen bzw. Faserlagen in einem Arbeitsgang und in Bandlängsrichtung die Stabilisierungsfäden aus Polyester im Beispielfall einlaufen. Auf diese Weise wird der bandförmige Vliesträger in seiner Dehnung - insbesondere in Bandlängsrichtung - reduziert. Grundsätzlich können bei diesem Vorgang die Stabilisierungsfäden auch in Gestalt eines Gewebes zwischen die beiden zu vereinigenden Vlieslagen eingebracht werden.

Jedenfalls wird auf diese Weise der gewünschte Vliesträger aus den beiden Vlieslagen hergestellt. Anschließend werden die beiden Vlieslagen dadurch miteinander und mit den Stabilisierungsfäden verbunden, dass eine Thermobehandlung respektive eine thermische Verfestigung durch Heißkalandrierung erfolgt. Bei dieser Thermobehandlung werden die einzelnen Polyesterfäden im Beispielfall zumindest teilweise plastifiziert und sorgen als gleichsam Bindemittel für die Endverfestigung des Spinnvliesträgers.

Zum Abschluss wird auf den solchermaßen hergestellten Vliesträger eine Kleberbeschichtung wie im Beispiel 1 aufgebracht. Selbstverständlich kann diese Kleberbeschichtung auch in Streifen erfolgen, um eine definierte und begrenzte Klebkraft zur Verfügung zu stellen.

## Patentansprüche

1. Verwendung eines Klebebandes mit einem bandförmigen Vliesträger, welcher mehrere zumindest in Bandlängsrichtung durchgängig verlaufende Stabilisierungsfäden als Bestandteile eines Fadengeleges aufweist, die auf seiner Oberfläche und/oder in seinem Innem angeordnet sind, und mit zumindest einer ein- oder beidseitigen Kleberbeschichtung, wobei das Klebeband im Ganzen eine Reißdehnung von weniger als 50 % aufweist, zur Bündelung von Kabeln in Automobilen.

2. Verwendung nach Anspruch 1, **dadurch gekennzeichnet, dass** die Reißdehnung zwischen 30 % bis 40 % angesiedelt ist.

3. Verwendung nach Anspruch 1 oder 2, **dadurch gekennzeichnet, dass** die Stabilisierungsfäden Bestandteile eines Fadengeleges sind.

4. Verwendung nach einem der Ansprüche 1 bis 3, **dadurch gekennzeichnet, dass** die Stabilisierungsfäden als Fadengewirke oder Fadengewebe ausgebildet sind.

5. Verwendung nach einem der Ansprüche 1 bis 4, **dadurch gekennzeichnet, dass** der Vliesträger aus wenigstens zwei Vlieslagen aufgebaut ist, welche zwischen sich die Stabilisierungsfäden aufnehmen.

6. Verwendung nach einem der Ansprüche 1 bis 5, **dadurch gekennzeichnet, dass** die Stabilisierungsfäden ein Flächengewicht von 10 bis 150 g/m², insbesondere von 10 bis 40 g/m², aufweisen.

7. Verwendung nach einem der Ansprüche 1 bis 6, **dadurch gekennzeichnet, dass** der Vliesträger inklusive der Stabilisierungsfäden ein Flächengewicht von 40 bis 300 g/m², insbesondere von 40 bis 100 g/m², aufweist.

8. Verwendung nach einem der Ansprüche 1 bis 7, **dadurch gekennzeichnet, dass** der Vliesträger inklusive der Stabilisierungsfäden eine Dicke von 0,20 bis 2,00 mm besitzt.

## Claims

1. Use of an adhesive tape comprising a strip-shaped nonwoven carrier which comprises a plurality of stabilising threads running continuously at least in the longitudinal direction of the strip as components of a laid scrim which are disposed on the surface thereof and/or in the interior thereof and having at least one one-sided or double-sided adhesive coating, wherein the adhesive tape has an elongation at break of less than 50%, for the trunking of cables in automobiles.

2. Use according to claim 1, **characterised in that** the elongation at break is between 30% and 40%.

3. Use according to claim 1 or 2, **characterised in that** the stabilising threads are components of a laid scrim.

4. The use according to any one of claims 1 to 3, **characterised in that** the stabilising threads are formed as thread knitted fabric or thread woven fabric.

5. The use according to any one of claims 1 to 4, **characterised in that** the nonwoven carrier is constructed of at least two nonwoven layers which receive the stabilising threads between them.

6. The use according to any one of claims 1 to 5, **characterised in that** the stabilising threads have a weight per unit area of 10 to 150 g/m², in particular 10 to 40 g/m²_{.}

7. The use according to any one of claims 1 to 6, **characterised in that** the nonwoven carrier including the stabilising threads has a weight per unit area of 40 to 300 g/m², in particular 10 to 100 g/m².

8. The use according to any one of claims 1 to 7, **characterised in that** the nonwoven carrier including the stabilising threads has a thickness of 0.20 to 2.00 mm.

## Revendications

1. Utilisation d'un ruban adhésif comportant un support de non-tissé en forme de bande qui présente plusieurs fils de stabilisation s'étendant en continu du moins dans le sens longitudinal de la bande et faisant partie intégrante d'un non-tissé en fil, lesquels fils de stabilisation sont disposés sur sa surface et/ou dans son intérieur, et comportant au moins un revêtement adhésif uni- ou bilatéral, le ruban adhésif dans son ensemble présentant une élongation à la rupture de moins de 50 %, pour le regroupement en faisceaux de câbles dans les automobiles.

2. Utilisation selon la revendication 1, **caractérisée en ce que** l'élongation à la rupture se situe entre 30 % et 40 %.

3. Utilisation selon la revendication 1 ou 2, **caractérisée en ce que** les fils de stabilisation font partie intégrante d'un non-tissé en fil.

4. Utilisation selon une des revendications 1 à 3, **caractérisée en ce que** les fils de stabilisation se présentent sous forme de fils tricotés ou de fils tissés.

5. Utilisation selon une des revendications 1 à 4, **caractérisée en ce que** le support de non-tissé est composé d'au moins deux épaisseurs de non-tissé qui reçoivent entre elles les fils de stabilisation.

6. Utilisation selon une des revendications 1 à 5, **caractérisée en ce que** les fils de stabilisation présentent un grammage de 10 à 150 g/m², notamment de 10 à 40 g/m².

7. Utilisation selon une des revendications 1 à 6, **caractérisée en ce que** le support de non-tissé, y compris les fils de stabilisation, présente un grammage de 40 à 300 g/m², notamment de 40 à 100 g/m².

8. Utilisation selon une des revendications 1 à 7, **caractérisée en ce que** le support de non-tissé, y compris les fils de stabilisation, a une épaisseur de 0,20 à 2,00 mm.
